# FASCICULE DE BREVET EUROPEEN

(11) **EP 3 374 063 B1**
(45) Date de publication et mention de la délivrance du brevet: **08.09.2021**
(21) Numéro de dépôt: 16784198.0
(22) Date de dépôt: 20.10.2016
(51) Int. Cl.: B01D 53/90, B01D 53/94, B01J 31/02, F01N 3/20, F01N 3/029

(54) **PREPARATION ET UTILISATION DE FLUIDE D'UNE SOLUTION HOMOGENE POUR LA DEPOLLUTION DE MOTEURS THERMIQUES**
HERSTELLUNG UND VERWENDUNG VON FLUID EINER HOMOGENEN LÖSUNG ZUR ABGASREINIGUNG VON THERMISCHEN MOTOREN
PREPARATION AND USE OF A FLUID OF A HOMOGENEOUS SOLUTION FOR THE EXHAUST CLEANING OF THERMAL ENGINES

(30) Priorité: 13.11.2015 FR 1560907
(43) Date de publication de la demande: 19.09.2018
(73) Titulaire: IFP Energies nouvelles, 92500 Rueil-Malmaison (FR)
(72) Inventeur: GONZALEZ, Serge, 69330 Jonage (FR); PASQUIER, David, 69006 Lyon (FR); VALLET, Jacques, 69008 Lyon (FR)
(74) Mandataire: IFP Energies nouvelles
(86) Numéro de dépôt international: PCT/EP2016/075197
(87) Numéro de publication internationale: WO 2017/080778

(56) Documents cités:
- EP-A2- 2 541 012
- WO-A1-97/28358
- US-A- 6 051 040
- US-A1- 2003 226 312
- QU FENGDONG ET AL: "Fe3O4-NiO core-shell composites: Hydrothermal synthesis and toluene sensing pr", 1 octobre 2014 (2014-10-01), MATERIALS LETTERS, PAGE(S) 167 - 170, XP029037517, ISSN: 0167-577X alinéa [0002]

## Description

### CONTEXTE DE L'INVENTION

La présente invention décrit un fluide unique pour la dépollution automobile, permettant d'effectuer deux opérations distinctes : la réduction catalytique sélective des NOx en utilisant la technologie de Réduction Catalytique Sélective, couramment désignée par son nom anglais Selective Catalytic Réduction, ou par l'acronyme SCR, ainsi que l'aide à la régénération du filtre à particules (FAP), cette aide à la régénération pouvant se manifester soit par la promotion de la régénération en continue du filtre à particules, soit par l'accélération de la combustion des suies lors des phases de régénération actives du FAP, soit par une combinaison de ces deux avantages. Le fluide selon l'invention est homogène et présente des caractéristiques de stabilité dans le temps, ou lors de variations de la température ou de pH. La présente invention décrit différents modes d'obtention du fluide ainsi que le mode d'utilisation de ce fluide.

### EXAMEN DE L'ART ANTERIEUR

Différentes technologies sont mises en œuvre pour diminuer les émissions nocives des gaz d'échappement issus des moteurs thermiques Diesel, notamment les oxydes d'azote (NOx) et les particules.
Un exemple de ligne d'échappement intégrant le système de traitement deNOx par réduction catalytique sélective, (notée SCR abréviation de Selective Catalytic Reduction dans la terminologie anglo saxonne), et le filtre à particules (en abrégé FAP), est donné dans le brevet FR 2947004. Ces deux systèmes de dépollution peuvent également être regroupés dans un seul module, celui-ci étant connu sous le terme de SCR sur filtre ou SCRF ou SDPF ou SCRoF.
Le document US 2003/226312 décrit la préparation d'un fluide comprenant un additif aqueux pour des dispositifs de combustion de matières hydrocarbonées dans lequel on additionne un complexe métallique dans une solution aqueuse d'au moins un composé réducteur ou précurseur d'un agent réducteur (urée).

Le document US 6 051 040 A décrit un fluide permettant d' améliorer le fonctionnement d'un moteur diesel grâce à l'utilisation d'un additif pour carburant à base d'urée ou d'un composé similaire et de compositions solubles dans le carburant de métal du groupe du platine.

Nous n'avons pas trouvé dans la littérature un procédé de préparation conduisant systématiquement à un fluide homogène permettant de cumuler les fonctions de réduction des oxydes d'azote et d'aide à la régénération des particules de suies piégées.
L'AdBlue® (ou AUS32 ou DEF ou ARLA32) est une solution d'urée à 32,5 % en masse dans de l'eau pure, qui est utilisée pour la réduction sélective des oxydes d'azote dans le cadre de la technologie SCR pour les applications routières et non routières.
Le concept général de mutualisation de ces fonctions de dépollution a fait l'objet, fin 2014, du dépôt de la demande de brevet français 14/62.228. On peut considérer la présente demande comme un perfectionnement de la demande 14/62.228.

### DESCRIPTION SOMMAIRE DE L'INVENTION

La présente invention décrit un procédé de préparation d'un fluide pour la dépollution de moteurs thermiques notamment Diesel, permettant d'effectuer à la fois la réduction catalytique sélective des oxydes d'azote contenus dans les gaz d'échappement (fonction dite SCR), ainsi que l'aide à la régénération du filtre à particules (FAP) par combustion catalytique des particules de suies déposées dans le filtre à particules (fonction dite d'aide à la régénération du FAP), cette aide à la régénération pouvant se manifester soit par la promotion de la régénération en continue du filtre à particules, soit par l'accélération de la combustion des suies lors des phases de régénération actives du FAP, soit par une combinaison de ces deux avantages.
L'utilisation du catalyseur d'oxydation des suies diffère de l'art antérieur précédemment cité en ce qu'il est injecté directement à l'échappement ne passant ainsi pas par la chambre de combustion du moteur. L'injection du fluide préparé selon l'invention est déclenchée par le calculateur moteur pour répondre à un besoin de disposer de la quantité nécessaire d'ammoniac sur le catalyseur SCR pour opérer la réduction efficace des NOx.
Les injections sont réalisées de manière régulière, selon une période typiquement comprise entre quelques millisecondes et quelques dizaines de secondes dépendant des conditions de fonctionnement du moteur, ce qui permet de favoriser un mélange homogène du catalyseur avec les suies et d'assurer un contact intime entre les suies et le catalyseur.
In fine le fait d'injecter le fluide préparé selon l'invention permet soit de favoriser le phénomène de régénération en continue du filtre à particules et d'espacer ainsi les périodes de régénération actives du FAP, soit d'accélérer la combustion de la suie lors des phases de régénération actives du FAP, permettant de limiter la consommation de carburant relative à cette phase et/ou de maximiser les chances de brûler une masse de suie importante lorsque les conditions de températures et de composition gazeuse à l'échappement sont favorables à cette régénération active, soit une combinaison de ces deux avantages.
Le fluide préparé selon l'invention consiste en une solution homogène, pouvant être claire ou limpide, constituée d'au moins un ion métallique complexé dans une solution aqueuse d'au moins un composé réducteur ou précurseur d'un agent réducteur, l' ion métallique étant Fe.

Dans le fluide pour la dépollution de moteurs thermiques Diesel préparé selon l' invention, le composé réducteur ou précurseur d'un agent réducteur est l'urée sous forme d'une solution d'urée à 32,5 % en masse dans de l'eau pure.
La concentration en ion métallique, sous forme ionique ou complexée, dans la solution du composé réducteur ou précurseur d'un agent réducteur est comprise entre 10 et 10000 ppm, de préférence entre 10 et 5000 ppm, et d'une manière préférée entre 10 et 2000 ppm.

Dans le fluide pour la dépollution de moteurs thermiques, notamment Diesel, préparé selon l'invention, l'ion métallique est introduit sous forme de sels organiques solubles choisis parmi les formiates, citrates, fumarates, succinates, nitrilotriacétates.

Selon une variante du fluide pour la dépollution de moteurs thermiques préparé selon l'invention, le composé réducteur ou précurseur d'un agent réducteur est de l'urée à 32,5 ± 0,7% massique en solution dans de l'eau pure et qui répond aux spécifications de la norme ISO 22241.

Selon une variante préférée de la présente invention, la solution contenant le ou les composés réducteurs ou le ou les précurseurs d'un agent réducteur est préparée à partir d'un produit répondant aux spécifications de la norme ISO 22241, par exemple les produits commerciaux AdBlue®, DEF, AUS32 ou ARLA32.

Selon une autre variante préférée de la présente invention, la solution contenant le ou les composés réducteurs ou le ou les précurseurs d'un agent réducteur est préparée à partir d'un produit respectant les caractéristiques physiques et chimiques de la norme ISO 22241-1, par exemple le produit commercial Diaxol®.

Par la suite, le terme Adblue® sera utilisé pour désigner indifféremment les produits suivants : Adblue®, DEF, AUS32, ARLA32 ou Diaxol.

Le fluide pour la dépollution de moteurs thermiques préparé selon l'invention reste préférentiellement stable dans une gamme de température allant de -11 à + 60 °C.

Enfin le fluide pour la dépollution de moteurs thermiques présente une bonne stabilité vis à vis de la lumière.

Selon le procédé de préparation du fluide de dépollution moteur selon l'invention, on additionne un complexe métallique de fer dans une solution aqueuse d'au moins un composé réducteur ou précurseur d'un agent réducteur.

Enfin l'invention concerne également l'utilisation dudit fluide de dépollution moteur dans un moteur à combustion interne de type Diesel, l'injection dudit fluide étant réalisée en amont des système de traitement des gaz d'échappement SCR et FAP, et étant opérée de façon régulière dépendant des conditions de fonctionnement du moteur thermique.

### DESCRIPTION DETAILLEE DE L'INVENTION

L'invention consiste en un procédé de préparation d'un fluide multifonctionnel pour la dépollution des gaz d'échappement provenant d'un moteur à combustion interne. Le fluides multifonctionnel préparé selon l'invention favorise soit la régénération en continu du filtre à particules, soit la combustion des suies lors des phases de régénération actives du FAP, soit permet une combinaison de ces deux avantages.

Ce fluide incorpore un additif catalytique de régénération du filtre à particules à une solution aqueuse contenant au moins un réducteur ou au moins un précurseur d'agent réducteur des NOx.

La réalisation du fluide selon l'invention conduit à une solution parfaitement limpide et homogène, qui présente des caractéristiques de stabilité dans le temps, et dans une gamme de pH allant de 7 à 12, et ceci jusqu'à une température de 60°C.

Le fluide selon l'invention peut être réalisée à partir d'une solution commerciale d'AdBlue® suivant les spécifications ISO 22241.

Un des avantages du fluide préparé selon l'invention réside dans le fait que la composition de ce fluide cumule les deux fonctions de dépollution moteur en un seul fluide.

Un des autres avantages de l'invention est de ne pas modifier sensiblement les propriétés de densité, de viscosité et de conservation de la solution d'AdBlue®, ce qui signifie en pratique qu'aucune modification du système d'injection de l'AdBlue® dans le moteur n'est nécessaire afin de bénéficier des avantages de l'invention.

Le principe du fluide préparé selon l'invention est de réunir dans la solution un composé : l'urée, qui va agir comme un agent réducteur ou précurseur d'agent réducteur comme l'ammoniac, et un ion métallique qui, dans la ligne d'échappement sous l'effet de la température et de l'oxygène résiduel des gaz d'échappement, va se transformer en un composé capable d'abaisser la température d'oxydation des suies, ou encore d'en accroître la vitesse d'oxydation par un processus catalytique, et ainsi aider à la régénération du FAP.

Il existe différentes manières de réaliser le fluide selon l'invention correspondant à plusieurs variantes.

La plus simple consiste à modifier une solution commerciale d'AdBlue® ou à réaliser une solution d'urée suivant les spécifications ISO 22241-1..

Il est possible de réaliser des solutions limpides et homogènes avec différents composés susceptibles d'apporter une concentration suffisante d'au moins un ion métallique favorisant l'oxydation des suies après décomposition de ce composé dans la ligne d'échappement. La suite de la description détaille plusieurs modes de réalisation du fluide selon l'invention. L'apport des ions métalliques en solution peut être effectué à partir de plusieurs familles de composés, solubles dans le milieu, l'ion métallique étant introduit sous forme de sels organiques solubles choisis parmi les formiates, citrates, fumarates, succinates, nitrilotriacétates.
- Selon le procédé de préparation selon l'invention, on additionne ledit composé soluble qui contient une source de métal, dans la solution d'AdBlue®. Ce composé est un complexe métallique.

La teneur en fer en solution sous forme ionique ou complexée, dans la composition finale du fluide est comprise entre 10 et 10000 ppm, de préférence entre 10 et 5000 ppm, et d'une manière encore préférée entre 10 et 2000 ppm.

La réduction de la teneur en métal est préférée car elle permet d'éviter l'accumulation de cendres métalliques dans le FAP.

Le fluide tel que préparé dans la présente invention est stable dans le temps dans une gamme de pH comprise entre 7 et 12. L'action de la lumière ne modifie pas la stabilité de la solution, et les conditions de cristallisation et de stabilité de l'urée ne sont pas affectées.

L'exposition prolongée à des températures de +60 °C n'altère pas non plus cette stabilité.

Le dégel de la solution après gel à cœur permet de retrouver les propriétés de la solution avant gel (pas de précipitation). Enfin, le fluide étant préparé à partir d'une solution d'urée ou d'AdBlue®, la quantité du ou des agents additionnés à la solution reste faible et permet de satisfaire à la concentration d'urée normalisée de 32,5 ± 0,7 %.

Le caractère inventif de l'invention réside dans la sélection judicieuse des composants de la formulation. Il n'est pas évident de maintenir en solution des ions métalliques dans une solution d'urée qui se trouve être basique. En effet, naturellement, les solutions contenant des ions métalliques tels que Fe²⁺, Fe³⁺notamment, tendent à former des précipités d'hydroxydes métalliques insolubles à pH neutre ou basique.

### EXEMPLES SELON L'INVENTION

Les exemples qui suivent décrivent quatre modes de préparation de fluide comprenant un métal dans une solution aqueuse d'urée.

Les fluides peuvent être préparées à température ambiante ou à une température inférieure à 60 °C.

Lorsque le fluide n'est pas homogène, il ne répond pas aux spécifications. Ces quelques cas de figure démontrent que l'obtention d'un fluide homogène selon l'invention n'a pas de caractère systématique. Tous les exemples décrits ont été réalisés avec une solution d'AdBlue® commercial.

### Exemples 1 à 5

Le fluide est réalisé comme suit : dans un flacon en verre de 250 cm³ contenant un barreau magnétique, on introduit 100 g d'AdBlue®, on additionne une quantité de composé correspondant à une concentration finale dans la solution de 350 ppm de métal. Après 5 minutes d'agitation à température ambiante, on évalue l'aspect de la composition.

**Tableau 1**

| Exemple | AdBlue® | Composé | Aspect du fluide |
|---|---|---|---|
| 1 (Comparatif ) | 100 g | FeSO₄, 7 H₂O | Hétérogène - Précipité bleu |
| 2 (Comparatif ) | 100 g | Acétate de fer II | Hétérogène - Précipité bleu |
| 3 | 100 g | Citrate d'ammonium ferrique | Homogène - ambré |
| 4 (Comparatif ) | 100 g | Sel monosodique de l'acide éthylènediamine tétracétique ferrique | Homogène - ambré |
| 5 (Comparatif ) | 100 g | Sel disodique de l'acide éthylènediamine tétracétique cuivreux | Homogène - bleu |

On vérifie qu'il existe des compositions du fluide préparé selon l'invention (exemple 3) donnant des solutions homogènes, limpides de fer sans dépôt de solide et sans utiliser d'agent complexant.

Dans le tableau 1, les exemples 1 et 2 ne satisfont pas à l'invention, car ils conduisent à un fluide hétérogène.

L'exemple 4 nécessite d'introduire le fer sous forme d'un sel d'EDTA (complexant). L'exemple 5 concerne l'introduction de cuivre sous forme d'un sel d'EDTA (complexant).

### Exemples 6 à 15 (comparatifs)

Le fluide est réalisé comme suit : dans un flacon en verre de 100 cm³ contenant un barreau magnétique, on introduit 50 g d'AdBlue®, on additionne un agent complexant.

La solubilisation de l'agent complexant est effectuée sous agitation. On additionne ensuite une quantité de composé correspondant à une concentration finale dans la solution de 350 ppm de métal. Par défaut, nous utilisons un rapport molaire agent complexant/composé métallique égal à 2. Après 5 minutes d'agitation à température ambiante, on évalue l'aspect de la composition.

**Tableau 2**

| Exemple | AdBlue ® | Complexant | Composé | Aspect du fluide |
|---|---|---|---|---|
| 6 (Comparatif) | 50 g | Aucun | Sel de Mohr | hétérogène- précipité bleu |
| 7 (Comparatif) | 50 g | Tiron | Sel de Mohr | Homogène et translucide - bordeaux |
| 8 (Comparatif) | 50 g | Aucun | FeSO₄, 7 H₂O | hétérogène - précipité bleu |
| 9 (Comparatif) | 50 g | Tiron | FeSO₄, 7 H₂O | homogène et translucide - bordeaux |
| 10 (Comparatif) | 50 g | DETPA | FeSO₄, 7 H₂O | homogène - jaune vif |
| 11 (Comparatif) | 50 g | DETPA | Fe₂(SO₄)₃ | homogène - jaune doré |
| 12 (Comparatif) | 50 g | Trilon (30% dans l'eau) | FeSO₄, 7 H₂O | homogène - jaune vert |
| 13 (Comparatif) | 50 g | Trilon (30% dans l'eau) | Fe(NO₃)₃, 9 H₂O | homogène - verdâtre |
| 14 (Comparatif) | 50 g | EDTA | Fe(NO₃)₃, 9 H₂O | homogène - jaune |
| 15 (Comparatif) | 50 g | EDTA tétrasodique | Fe(NO₃)₃, 9 H₂O | homogène - ocre rose |

On voit qu'il est nécessaire d'ajouter un complexant et de respecter un rapport molaire complexant/composé suffisant pour obtenir la solubilité des composés de fer dans les exemples 1 à 5, 7, 9 à 15.

La préparation du fluide peut être effectuée de différentes manières, mais de préférence, on travaille à température ambiante en introduisant d'abord l'agent complexant dans la solution d'urée ou d'Adblue®.

Les cas 6 et 8 qui ne comportent pas d'agent complexant, conduisent à un fluide non homogène.

### Exemples 16 et 17avec introduction de zinc (Comparatifs)

Le fluide est réalisé comme suit : dans un flacon en verre de 100 cm³ contenant un barreau magnétique, on introduit 50 g d'AdBlue®, on additionne un agent complexant.

La solubilisation de l'agent complexant est effectuée sous agitation. On additionne ensuite une quantité de composé de type oxyde ou oxyhydroxyde métallique (Zinc) correspondant à une concentration finale dans la solution de 350 ppm de métal. Après 5 minutes d'agitation à température ambiante, on évalue l'aspect de la composition.

**Tableau 3**

| Exemple | AdBlue® | Complexant | Composé | Aspect du fluide |
|---|---|---|---|---|
| 16 (Comparatif) | 50 g | Aucun | ZnO | Hétérogène - colloïdale |
| 17 (Comparatif) | 50 g | DETPA | ZnO | Homogène - Incolore |

### Exemples 18 à 20 (comparatifs)

Le fluide est réalisé comme suit : dans un flacon en verre de 100 cm³ contenant un barreau magnétique, on introduit 50 g d'AdBlue®, on additionne un agent complexant.

La solubilisation de l'agent complexant est effectuée sous agitation.

On additionne ensuite une quantité de composé de type oxyde ou oxyhydroxyde métallique correspondant à une concentration finale dans la solution de 500 ppm de métal. Après 24 heures d'agitation à température ambiante, on effectue la filtration de la solution et on récupère le filtrat. L'analyse ICP-OES ASTM D7260 permet de mesurer la concentration de l'ion métallique et de l'ajuster le cas échéant.

**Tableau 4**

| | AdBlue® | Complexant | Composé | Teneur en ion | Aspect du fluide |
|---|---|---|---|---|---|
| 18 (Comparatif) | 50 g | Tiron | Fe₂O₃ | 10 mg/l | Homogène |
| 19 (Comparatif) | 50 g | Tiron | FeO(OH) | <2,5 mg/l | Homogène |
| 20 (Comparatif) | 50 g | Tiron | TiO₂ | < 1,25 mg/l | Homogène |

### Exemples illustrant la stabilité du fluide en fonction du pH et de la Température (selon l'invention)

La dégradation de la solution d'urée dans le temps et en température peut entraîner une augmentation du pH de l'AdBlue®. Nous préparons un fluide selon l'invention selon l'exemple 3 et nous additionnons une solution d'ammoniaque à 20 % de concentration jusqu'à mesurer un pH de 12.

Le tableau 5 montre bien que le fluide préparé selon l'invention selon l'exemple 3 permet de conserver son aspect homogène et limpide dans une variation de pH de 7 à 12 au moins.

**Tableau 5 : influence du pH sur la stabilité de différents fluides selon l'invention**

| Exemple | Exemple | ammoniaque | Aspect du fluide |
|---|---|---|---|
| 21 | Exemple 3 : 5 g | 3g | Limpide -homogène ambré |

Le fluide selon l'invention ne modifie pas les conditions de cristallisation de la solution d'urée. Nous introduisons la solution d'Adblue® dans un tube à essai que nous plongeons dans un bac froid. Nous mesurons une température de cristallisation de l'urée à - 11 ± 1 °C.

Afin de vérifier que les exemples de fluide préparé selon l'exemple 3 suivant l'invention ne modifient pas la température de cristallisation, nous immergeons pendant une heure des tubes à essai contenant les fluides suivant l'invention dans un bac froid maintenu à - 10 ± 1°C, nous constatons qu'à cette température le fluide reste limpide et homogène.

**Tableau 6 : Influence de la température sur la stabilité du fluide selon l'invention**

| Exemple | Exemple | Aspect du fluide à -10 °C |
|---|---|---|
| 22 | Exemple 3 | Limpide - homogène ambré |

Si nous abaissons la température à -11 °C ± 1 °C, les fluides cristallisent puis redeviennent homogènes en augmentant la température.

## Revendications

1. Procédé de préparation d'un fluide pour la dépollution de moteurs thermiques, notamment Diesel, permettant d'effectuer à la fois la réduction catalytique sélective des oxydes d'azote contenus dans les gaz d'échappement, ainsi que l'aide à la régénération du filtre à particules par combustion catalytique des particules de suies déposées dans le filtre à particules, constitué d'une solution limpide et homogène d'au moins un ion métallique complexé dans une solution d'urée à 32,5 % en masse dans de l'eau pure, selon lequel on additionne un complexe métallique dans ladite solution d'urée à 32,5 % en masse dans de l'eau pure, et selon lequel l'ion métallique est le fer et est introduit sous forme de sels organiques solubles choisis parmi les formiates, citrates, fumarates, succinates, nitrilotriacétates à une concentration en ion métallique, sous forme ionique ou complexée, dans ladite solution d'urée à 32,5 % en masse dans de l'eau pure comprise entre 10 et 10000 ppm, de préférence entre 10 et 5000 ppm.

2. Procédé de préparation d'un fluide pour la dépollution de moteurs thermiques, selon la revendication 1, dans lequel la concentration en ion métallique, sous forme ionique ou complexée, dans ladite solution d'urée à 32,5 % en masse dans de l'eau pure est comprise entre 10 et 2000 ppm.

3. Utilisation du fluide de dépollution moteur préparé selon l'une des revendications 1 ou 2 dans un moteur à combustion interne de type Diesel, l'injection dudit fluide étant réalisée en amont des système de traitement des gaz d'échappement SCR et FAP, et étant opérée de façon régulière dépendant des conditions de fonctionnement du moteur thermique.

## Patentansprüche

1. Verfahren zur Herstellung einer Flüssigkeit zur Abgasreinigung von Wärmekraftmaschinen, insbesondere Dieselmotoren, mit dem sich gleichzeitig die selektive katalytische Reduktion von in den Abgasen enthaltenen Stickoxiden sowie eine Unterstützung bei der Regeneration des Partikelfilters durch katalytische Verbrennung von Rußpartikeln, die in dem Partikelfilter abgeschieden sind, erreichen lässt, die aus einer klaren und homogenen Lösung aus mindestens einem komplexierten Metallion in einer Lösung mit 32,5 Gewichts-% Harnstoff in reinem Wasser besteht, bei dem der Lösung mit 32,5 Gewichts-% Harnstoff in reinem Wasser ein Metallkomplex zugegeben wird und bei dem das Metallion Eisen ist und in Form von löslichen organischen Salzen, ausgewählt aus Formiaten, Citraten, Fumaraten, Succinaten, Nitrilotriacetaten, mit einer Konzentration des Metallions in lonenform oder komplexierter Form in der Lösung mit 32,5 Gewichts-% Harnstoff in reinem Wasser zwischen 10 und 10.000 ppm, vorzugsweise zwischen 10 und 5000 ppm zugeführt wird.

2. Verfahren zur Herstellung einer Flüssigkeit zur Abgasreinigung von Wärmekraftmaschinen nach Anspruch 1, wobei die Konzentration des Metallions in lonenform oder komplexierter Form in der Lösung mit 32,5 Gewichts-% Harnstoff in reinem Wasser zwischen 10 und 2000 ppm beträgt.

3. Verwendung der Motorabgasreinigungsflüssigkeit, die nach Anspruch 1 oder 2 hergestellt ist, in einem Diesel-Verbrennungsmotor, wobei das Einspritzen der Flüssigkeit in Strömungsrichtung vor dem SCR- und FAP-Abgasbehandlungssystem vorgenommen wird und in Abhängigkeit von den Betriebsbedingungen der Wärmekraftmaschine regelmäßig erfolgt.

## Claims

1. Process for preparing a fluid for the decontamination of heat engines, especially diesel engines, enabling not only selective catalytic reduction of the nitrogen oxides present in the exhaust gases but also assistance in the regeneration of the particle filter by catalytic combustion of the soot particles deposited in the particle filter, consisting of a clear and homogeneous solution of at least one metal ion complexed in a 32.5% by mass solution of urea in pure water, wherein a metal complex is added to said 32.5% by mass solution of urea in pure water, and wherein the metal ion is iron and is introduced in the form of soluble organic salts selected from formats, citrates, fumarates, succinates and nitrilotriacetates at a metal ion concentration, in ionic or complexed form, in said 32.5% by mass solution of urea in pure water of between 10 and 10 000 ppm, preferably between 10 and 5000 ppm.

2. Process for preparing a fluid for the decontamination of heat engines, according to Claim 1, wherein the metal ion concentration, in ionic or complexed form, in said 32.5% by mass solution of urea in pure water is between 10 and 2000 ppm.

3. Use of the engine decontamination fluid prepared according to either of Claims 1 and 2 in an internal combustion engine of diesel type, the injection of said fluid being carried out upstream of the PF and SCR exhaust gas treatment systems, and being performed regularly depending on the operating conditions of the heat engine.
